# EUROPEAN PATENT APPLICATION

(11) **EP 4 560 901 A1**
(43) Date of publication of application: **28.05.2025**
(21) Application number: 23211348.0
(22) Date of filing: 22.11.2023
(51) Int. Cl.: H02M 1/00, H02M 1/38, H02M 3/00, H02M 3/335

(54) **SWITCHING POWER SUPPLY, AND METHOD OF OPERATING THE SAME**

(71) Applicant: Tridonic GmbH & Co KG, 6851 Dornbirn (AT)
(72) Inventor: Schneider, Miguel Philipp, 6851 Dornbirn (AT); Romano, Fabio, 6851 Dornbirn (AT)
(74) Representative: Rupp, Christian

(57) **Abstract**

Disclosed is a switching power supply *(1)* and a method *(4)* of operating such a power supply *(1).* The power supply *(1)* comprises: a transformer *(101, 102),* comprising a primary-side inductance *(101*, *Lp)* and a secondary-side inductance *(102*, *Ls)*; a high-side switch *(103)* and a low-side switch *(104)*, connected in series between an input electric potential *(Vin)* and a primary-side ground electric potential of the power supply *(1)*; a sensing circuit *(105)*; and a control circuit *(110)*, configured to: determine a nominal duration *(32'*) of a deadtime period *(32)* between a preceding conduction phase *(31)* of the low-side switch *(104)* and a succeeding conduction phase *(34)* of the high-side switch *(103)*; sense, via the sensing circuit *(105),* a voltage being indicative of a primary-side current (36, *Ip)* through the primary-side inductance *(101*, *Lp)*; and proceed from the deadtime period *(32)* to the succeeding conduction phase *(34)* of the high-side switch *(103)* upon one or more of: a lapse *(33'*) of the nominal duration *(32')* of the deadtime period *(32)*, and a zero-crossing *(33")* of the primary-side current *(36*, *Ip)* through the primary-side inductance *(101, Lp).* This effectively avoids a collapse of a midpoint voltage *(35)* of the switches *(103*, *104)* and the associated inefficiency as well as a possible destruction of the switches *(103*, *104).*

## Description

### Technical Field

The present disclosure relates generally to the field of lighting technology, and in particular to a switching power supply, and to a method of operating said power supply.

### Background Art

A resonant hybrid flyback converter refers to a switching power supply including a combination of a flyback converter (wherein a square-wave voltage is applied to a primary-side inductance of a transformer) and a resonant converter (wherein the square-wave voltage is applied to a resonant tank circuit) in that the resonant tank circuit includes the primary-side inductance. A switching half-bridge intermittently applies a DC input/bus voltage across the resonant tank circuit. Unlike a forward-topology transformer, whose primary and secondary inductances conduct simultaneously, a flyback transformer stores energy during every first sub-cycle of the intermittent operation and delivers it to the load during every second sub-cycle of the intermittent operation.

For a stable and efficient half-bridge operation of such power supplies, appropriate settings for the deadtimes between subsequent on-times of the switches are required. Often the deadtimes are defined once and kept constant across all operating conditions.

However, for LED drivers with very wide output windows this can be very tricky and not efficient, therefore adaptive deadtime settings are required wherein the deadtime is determined by the system and changes from operating point to operating point.

Due to large half-bridge capacities especially at low loads, charging a midpoint of the switching half-bridge up to the input/bus voltage level *Vin* requires long low-side (LS) to high-side (HS) deadtimes, i.e., after a preceding on-time of a LS switch and before a succeeding on-time of the HS switch of the switching half-bridge.

Too long deadtimes on the other hand, lead to a collapse of the midpoint voltage and therefore to inefficiency and in worst case to a destruction of the switches of the half-bridge.

### Summary

It is an object to overcome the above-mentioned and other drawbacks.

The foregoing and other objects are achieved by the features of the independent claims. Further implementation forms are apparent from the dependent claims, the description and the figures.

According to a first aspect of the present disclosure, a switching power supply is provided. The power supply comprises: a transformer, comprising a primary-side inductance and a secondary-side inductance; a high-side switch and a low-side switch, connected in series between an input electric potential and a primary-side ground electric potential of the power supply; a sensing circuit; and a control circuit, configured to: determine a nominal duration of a deadtime period between a preceding conduction phase of the low-side switch and a succeeding conduction phase of the high-side switch; sense, via the sensing circuit, a voltage being indicative of a primary-side current through the primary-side inductance; and proceed from the deadtime period to the succeeding conduction phase of the high-side switch upon one or more of: a lapse of the nominal duration of the deadtime period, and a zero-crossing of the primary-side current through the primary-side inductance.

The sensing circuit may comprise a shunt resistance, connected in series to the primary-side inductance. A common electric potential of the shunt resistance and the primary-side inductance may be connected to a sensing terminal of the control circuit.

The control circuit may further be configured to sense, via the sensing circuit, the voltage being indicative of the primary-side current through the primary-side inductance by sampling the common electric potential connected to the sensing terminal.

The control circuit may further be configured to sense the zero-crossing of the primary-side current through the primary-side inductance by comparing the voltage being indicative of the primary-side current through the primary-side inductance with a voltage being indicative of a zero current.

The control circuit may further be configured to determine the nominal duration of a deadtime period between the preceding conduction phase of the low-side switch and the succeeding conduction phase of the high-side switch in accordance with a constant nominal duration for any load condition of the power supply.

The control circuit may further be configured to determine the nominal duration of a deadtime period between the preceding conduction phase of the low-side switch and the succeeding conduction phase of the high-side switch in accordance with an instantaneous load condition of the power supply.

The control circuit may further be configured to determine the nominal duration of a deadtime period between the preceding conduction phase of the low-side switch and the succeeding conduction phase of the high-side switch in accordance with an instantaneous load condition of the power supply by looking up the nominal duration in dependence of an output electric potential relative to a secondary-side ground electric potential of the power supply.

The power supply may comprise a resonant hybrid flyback converter.

According to a second aspect of the present disclosure, a luminaire is provided, comprising a light source and a switching power supply according to the first aspect.

The light source may comprise at least one light-emitting diode, LED.

According to a third aspect of the present disclosure, a method of operating a switching power supply is provided. The power supply comprises: a transformer, comprising a primary-side inductance and a secondary-side inductance; a high-side switch and a low-side switch, connected in series between an input electric potential and a primary-side ground electric potential of the power supply; and a sensing circuit. The method comprises: determining a nominal duration of a deadtime period between a preceding conduction phase of the low-side switch and a succeeding conduction phase of the high-side switch; sensing, via the sensing circuit, a voltage being indicative of a primary-side current through the primary-side inductance; and proceeding from the deadtime period to the succeeding conduction phase of the high-side switch upon one or more of: a lapse of the nominal duration of the deadtime period, and a zero-crossing of the primary-side current through the primary-side inductance.

The method may be performed by the power supply of the first aspect.

### Advantageous Effects

The present disclosure provides a power supply, preferably a resonant hybrid flyback converter, being configured to terminate a deadtime period *32* between a preceding conduction phase *31* of a low-side switch *104* and a succeeding conduction phase *34* of a high-side switch *103* prematurely upon a zero-crossing *33"* of a primary-side current *36, Ip* through a primary-side inductance *101, Lp.*

This effectively avoids a collapse of a midpoint voltage of the switches and the associated inefficiency as well as a possible destruction of the switches.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a switching power supply in accordance with the present disclosure; and
- FIG. 2: illustrates an operation of a known switching power supply; and
- FIG. 3: illustrates an operation of the switching power supply in accordance with the present disclosure; and
- FIG. 4: illustrates a method of operating a switching power supply in accordance with the present disclosure; and

### Detailed Descriptions of Drawings

In the following description, reference is made to the accompanying drawings, which form part of the disclosure, and which show, by way of illustration, specific aspects of implementations of the present disclosure or specific aspects in which implementations of the present disclosure may be used. It is understood that implementations of the present disclosure may be used in other aspects and comprise structural or logical changes not depicted in the figures. The following detailed description, therefore, is not to be taken in a limiting sense, and the scope of the present disclosure is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary implementations and/or aspects described herein may be combined with each other, unless specifically noted otherwise.

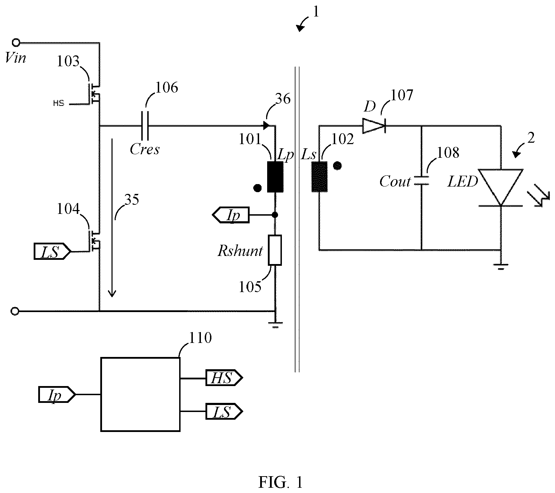

FIG. 1 illustrates a switching power supply *1* in accordance with the present disclosure.

In particular, the power supply *1* may comprise a resonant hybrid flyback converter.

A resonant hybrid flyback converter as used herein may refer to a switching power supply including a combination of a flyback converter (wherein a square-wave voltage is applied to a primary-side inductance of a transformer) and a resonant converter (wherein the square-wave voltage is applied to a resonant tank circuit) in that the resonant tank circuit includes the primary-side inductance. A switching half-bridge intermittently applies a DC input/bus voltage across the resonant tank circuit. Unlike a forward-topology transformer, whose primary and secondary inductances conduct simultaneously, a flyback transformer stores energy during every first sub-cycle of the intermittent operation and delivers it to the load during every second sub-cycle of the intermittent operation.

In the non-limiting example of FIG. 1, the power supply *1* and a light source *2* form part of a luminaire *1*, *2*. The light source *2* may comprise at least one light-emitting diode (LED).

The power supply *1* comprises a transformer *101, 102,* comprising a primary-side inductance *101, Lp* and a secondary-side inductance *102, Ls.*

The primary-side inductance *101, Lp* and the secondary-side inductance *102, Ls* form part of a primary side and a secondary side of the power supply *1*, respectively.

The primary side of the power supply *1* further comprises a high-side switch *103* and a low-side switch *104* connected in series between an input electric potential *Vin* (i.e., a DC bus voltage) and a primary-side ground electric potential of the power supply *1*.

The switches *103, 104* may respectively comprise a metal-oxide semiconductor field-effect transistor, MOSFET.

The switches *103, 104* may form part of a half-bridge (HB) as shown in FIG. 1 or a full bridge (FB), for example.

The primary side of the power supply *1* further comprises a control circuit *110.*

The control circuit *110* is configured to control the high-side (HS) switch *103* and the low-side (LS) switch *104* by means of control signals indicated by block arrows identified as *"HS"* and *"LS",* respectively.

The primary side of the power supply *1* further comprises a resonant tank circuit *101, 106,* connected in series between a common electric potential of the switches *103, 104* and the primary-side ground electric potential.

The resonant tank circuit *101, 106* comprises an LLC resonant tank including a resonance capacitance *106, Cᵣₑₛ* in series with the primary-side inductance *101, Lp* or more precisely, its main inductance (not shown) and leakage inductance (not shown).

The primary side of the power supply *1* further comprises a sensing circuit *105.*

The sensing circuit *105* may comprise a shunt resistance 105, *Rshunt* connected in series to the primary-side inductance *101, Lp.*

A common electric potential of the shunt resistance 105, *Rshunt* and the primary-side inductance *101, Lp* , indicated by a block arrow identified as *"Ip"* and being indicative of a primary-side current *36*, *Ip* through the primary-side inductance *101, Lp* may be connected to a sensing terminal of the control circuit *110.*

The secondary side of the power supply *1* comprises a half-wave rectifying and smoothing circuit including an output diode *107, D* and an output capacitance *108, Cₒᵤₜ* connected in series and connected in parallel to the secondary-side inductance *102, Lₛ.*

The light source *2* is shown as connected in parallel to the output capacitance *108, Cₒᵤₜ.*

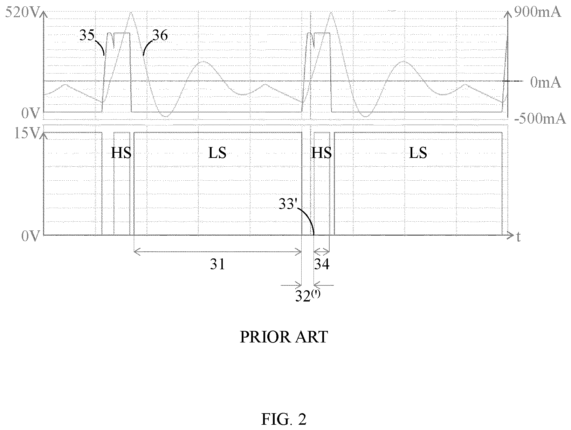

FIG. 2 illustrates an operation of a known switching power supply having a resonant hybrid flyback converter topology that corresponds to the illustration of FIG.1.

A lower portion of FIG. 2 shows the control signals of the high-side (HS) switch *103* and the low-side (LS) switch *104* already mentioned, referenced to the left axis (e.g., 0 - 15V).

An upper portion of FIG. 2 shows a voltage *35* between the common electric potential of the switches *103, 104* and the primary-side ground electric potential (i.e., a midpoint voltage *35* of the half-bridge *103, 104)* referenced to the left axis (e.g., 0 - 520V), and further depicts the primary-side current 36, *Ip* through the primary-side inductance *101, Lp* referenced to the right axis (i.e., -500 - 900mA).

The control circuit *110* is configured to determine a nominal duration *32'* of a deadtime period *32* between a preceding conduction phase *31* of the low-side switch *104* and a succeeding conduction phase *34* of the high-side switch *103* in accordance with a constant nominal duration for any load condition of the power supply *1*.

During the preceding conduction phase *31* of the low-side switch *104,* the common electric potential of the switches *103, 104* is clamped to the primary-side ground electric potential.

This clamping ceases to exist when the low-side switch *104* is turned off/open, so that starting from a beginning of the deadtime period *32*, *32*' between the preceding conduction phase *31* of the low-side switch *104* and the succeeding conduction phase *34* of the high-side switch *103,* the midpoint voltage 35 of the half-bridge starts to rise up to a level of the input/bus voltage *Vin.*

Due to big half-bridge capacities, especially at low loads (e.g. strong dimming), charging the half-bridge midpoint up to the level of the input/bus voltage *Vin* requires a long deadtime *32* between the preceding conduction phase *31* of the low-side switch *104* and the succeeding conduction phase *34* of the high-side switch *103* ( *"LS to HS deadtimes* ").

However, as can be seen in FIG. 2, too long deadtimes 32 result in a collapse of the midpoint voltage *35* and therefore to inefficiency and in worst case to a destruction of the half-bridge switches *103, 104.*

To prevent such a condition, the deadtime period *32* has to be limited in terms of its duration.

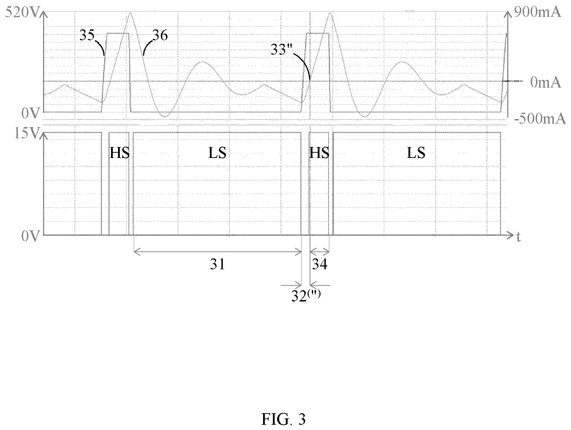

FIG. 3 illustrates an operation of the switching power supply *1* in accordance with the present disclosure.

In particular, the power supply *1* may comprise a resonant hybrid flyback converter.

Again, the control circuit *110* is configured to determine a nominal duration *32*' of a deadtime period *32* between a preceding conduction phase *31* of the low-side switch *104* and a succeeding conduction phase *34* of the high-side switch *103.*

This may comprise determining the nominal duration *32'* of the deadtime period *32* between the preceding conduction phase *31* of the low-side switch *104* and the succeeding conduction phase *34* of the high-side switch *103* in accordance with a constant nominal duration for any load condition of the power supply *1*, or in accordance with an instantaneous load condition of the power supply *1*. The latter may involve that the control circuit *110* is configured to look-up the nominal duration *32* ' in dependence of an output electric potential *Vout* relative to a secondary-side ground electric potential of the power supply *1* (i.e., implementation based on a given look-up table).

As it turns out, the aforementioned limitation of the deadtime period 32 is given by a zero crossing *33* " of the primary-side current 36, *Ip* through the primary-side inductance *101, Lp.*

Note that the deadtime period *32* between the preceding conduction phase *31* of the low-side switch *104* and the succeeding conduction phase *34* of the high-side switch *103* falls within a phase of the intermittent operation of the power supply *1* wherein the primary-side current 36, *Ip* is the same as a magnetizing current through the primary-side inductance *101, Lp.*

In other words, the limitation of the deadtime period 32 is actually given by a zero crossing *33* " of the magnetizing current through the primary-side inductance *101, Lp.*

When the magnetizing current changes its sign at the zero crossing *33* ", the midpoint voltage *35* starts to collapse. Therefore, the high-side switch *103* has to be turned on/conducting at or prior to the zero crossing *33* ".

To this end, the control circuit *110* is further configured to sense, via the sensing circuit *105,* a voltage being indicative of a primary-side current *36, Ip* through the primary-side inductance *101, Lp.*

This may involve the control circuit *110* being configured to sample the common electric potential of the shunt resistance 105, *Rshunt* and the primary-side inductance *101, Lp* connected to the sensing terminal.

The control circuit *110* may further be configured to sense the zero-crossing *33"* of the primary-side current *36, Ip* through the primary-side inductance *101, Lp* by comparing the voltage being indicative of the primary-side current *36, Ip* through the primary-side inductance *101, Lp* with a voltage being indicative of a zero current (e.g., 0V).

The control circuit *110* is further configured to proceed from the deadtime period *32* to the succeeding conduction phase *34* of the high-side switch *103* upon one or more of: a lapse *33'* of the nominal duration *32*' of the deadtime period *32,* and the zero-crossing *33"* of the primary-side current *36, Ip* through the primary-side inductance *101, Lp.*

This effectively avoids a collapse of the midpoint voltage *35* and the corresponding inefficiency as well as a destruction of the half-bridge switches *103, 104.*

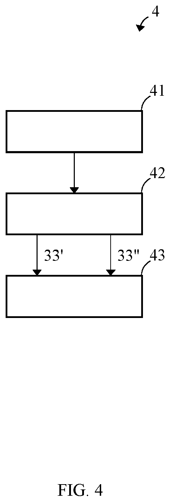

FIG. 4 illustrates a method *4* of operating a switching power supply *1* in accordance with the present disclosure.

The power supply *1* comprises a transformer *101, 102,* comprising a primary-side inductance 101 and a secondary-side inductance 102.

The power supply *1* further comprises a high-side switch *103* and a low-side switch *104* connected in series between an input electric potential *Vin* and a primary-side ground electric potential of the power supply *1*.

The power supply *1* further comprises a sensing circuit *105.*

The method *4* comprises a step of determining *41* a nominal duration of a deadtime period *32* between a preceding conduction phase *31* of the low-side switch *104* and a succeeding conduction phase *34* of the high-side switch *103.*

The method *4* further comprises a step of sensing *42*, via the sensing circuit *105,* a voltage being indicative of a primary-side current *36, Ip* through the primary-side inductance *101, Lp.*

The method *4* further comprises a step of proceeding *43* from the deadtime period *32* to the succeeding conduction phase *34* of the high-side switch *103* upon one or more of: a lapse *33'* of the nominal duration *32*' of the deadtime period *32* (i.e., the transition to the left of FIG. 4), and a zero-crossing *33"* of the primary-side current *36, Ip* through the primary-side inductance *101, Lp* (i.e., the transition to the right of FIG. 4).

The method *4* may be performed by the power supply *1* of the first aspect.

The present disclosure has been described in conjunction with various implementations as examples. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A switching power supply *(1)*, the power supply *(1)* comprising
a transformer *(101*, *102)*, comprising a primary-side inductance *(101, Lp)* and a secondary-side inductance *(102, Ls)*;
a high-side switch *(103)* and a low-side switch *(104),* connected in series between an input electric potential *(Vin)* and a primary-side ground electric potential of the power supply *(1)*;
a sensing circuit *(105)*; and
a control circuit *(110),* configured to
- determine a nominal duration *(32')* of a deadtime period *(32)* between a preceding conduction phase *(31)* of the low-side switch *(104)* and a succeeding conduction phase *(34)* of the high-side switch *(103)*;
- sense, via the sensing circuit *(105),* a voltage being indicative of a primary-side current *(36*, *Ip)* through the primary-side inductance *(101, Lp)*; and
- proceed from the deadtime period *(32)* to the succeeding conduction phase *(34)* of the high-side switch *(103)* upon one or more of:
- a lapse *(33')* of the nominal duration *(32')* of the deadtime period *(32),* and
- a zero-crossing *(33')* of the primary-side current *(36, Ip)* through the primary-side inductance *(101, Lp).*

2. The power supply *(1)* of claim 1,
the sensing circuit *(105)* comprising a shunt resistance (105, *Rshunt*), connected in series to the primary-side inductance *(101, Lp);*
a common electric potential of the shunt resistance (105, *Rshunt*) and the primary-side inductance *(101, Lp)* connected to a sensing terminal of the control circuit *(110).*

3. The power supply *(1)* of claim 2,
the control circuit *(110)* further being configured to
- sense, via the sensing circuit *(105),* the voltage being indicative of the primary-side current *(36*, *Ip)* through the primary-side inductance *(101, Lp)* by sampling the common electric potential connected to the sensing terminal.

4. The power supply *(1)* of claim 3,
the control circuit *(110)* further being configured to
- sense the zero-crossing *(33")* of the primary-side current *(36, Ip)* through the primary-side inductance *(101, Lp)* by comparing the voltage being indicative of the primary-side current *(36*, *Ip)* through the primary-side inductance *(101, Lp)* with a voltage being indicative of a zero current.

5. The power supply *(1)* of any one of the claims 1 to 4,
the control circuit *(110)* further being configured to
- determine the nominal duration *(32')* of a deadtime period *(32)* between the preceding conduction phase *(31)* of the low-side switch *(104)* and the succeeding conduction phase *(34)* of the high-side switch *(103)* in accordance with a constant nominal duration for any load condition of the power supply *(1)*.

6. The power supply *(1)* of any one of the claims 1 to 4,
the control circuit *(110)* further being configured to
- determine the nominal duration *(32')* of a deadtime period *(32)* between the preceding conduction phase *(31)* of the low-side switch *(104)* and the succeeding conduction phase *(34)* of the high-side switch *(103)* in accordance with an instantaneous load condition of the power supply *(1)*.

7. The power supply *(1)* of claim 6,
the control circuit *(110)* further being configured to
- determine the nominal duration *(32')* of a deadtime period *(32)* between the preceding conduction phase *(31)* of the low-side switch *(104)* and the succeeding conduction phase *(34)* of the high-side switch *(103)* in accordance with an instantaneous load condition of the power supply *(1)* by looking up the nominal duration in dependence of an output electric potential *(Vout)* relative to a secondary-side ground electric potential of the power supply *(1)*.

8. The power supply *(1)* of any one of the claims 1 to 7,
comprising a resonant hybrid flyback converter.

9. A luminaire *(1*, *2)*, comprising
a light source *(2)*; and
a switching power supply *(1)* of any one of the claims 1 to 8.

10. The luminaire *(1*, *2)* of claim 9,
the light source *(2)* comprising at least one light-emitting diode, LED.

11. A method *(4)* of operating a switching power supply *(1)*,
the power supply *(1)* comprising
a transformer *(101*, *102)*, comprising a primary-side inductance (101) and a secondary-side inductance (102);
a high-side switch *(103)* and a low-side switch *(104),* connected in series between an input electric potential *(Vin)* and a primary-side ground electric potential of the power supply *(1)*; and
a sensing circuit *(105)*;
the method *(4)* comprising
- determining *(41)* a nominal duration of a deadtime period *(32)* between a preceding conduction phase *(31)* of the low-side switch *(104)* and a succeeding conduction phase *(34)* of the high-side switch *(103);*
- sensing *(42)*, via the sensing circuit *(105),* a voltage being indicative of a primary-side current *(36, Ip)* through the primary-side inductance *(101, Lp)*; and
- proceeding *(43)* from the deadtime period *(32)* to the succeeding conduction phase *(34)* of the high-side switch *(103)* upon one or more of:
- a lapse *(33')* of the nominal duration *(32')* of the deadtime period *(32),* and
- a zero-crossing *(33")* of the primary-side current *(36, Ip)* through the primary-side inductance *(101, Lp).*

12. The method *(4)* of claim 11,
being performed by the power supply *(1)* of any one of the claims 1 to 8.
